# EUROPÄISCHE PATENTANMELDUNG

(11) **EP 1 625 992 A2**
(43) Veröffentlichungstag der Anmeldung: **15.02.2006**
(21) Anmeldenummer: 05106181.0
(22) Anmeldetag: 07.07.2005
(51) Int. Cl.: B62D 5/065, B62D 15/02

(54) **Hydraulische Servolenkung und Betriebs-Verfahren dazu**

(30) Priorität: 11.08.2004 DE 102004038936
(71) Anmelder: ZF-Lenksysteme GmbH, 73527 Schwäbisch Gmünd (DE)
(72) Erfinder: Leutner, Wilfried, D-73527 Schwäbisch Gmünd (DE)

(57) **Zusammenfassung**

Die Erfindung betrifft eine hydraulische Servolenkung für ein Fahrzeug und ein Verfahren zum Betrieb der hydraulischen Servolenkung, mit einem Drehschieber-Servoventil (1) zur bevorzugt direkten druckabhängigen Steuerung eines Druckmittels in Arbeitsräume (2,2') eines hydraulischen Servomotors (3), mit einem ersten Steuerteil (4) und mit einem zweiten Steuerteil (5), das relativ zu dem ersten Steuerteil (4) verdrehbar ist und mit einem hydraulischen Stellmotor (6), dessen Arbeitsräume (7,7') Rückwirkräume des Servoventils (1) sind, wobei der hydraulische Stellmotor (6) mit einem Steuerteil (4,5) des Servoventils (1) zur Verstellung der relativen Lage der Steuerteile (4,5) wirkverbunden ist.

Um eine hydraulische Servolenkung zu schaffen, die neben einem Betrieb der direkt druckabhängig das Lenkmoment beeinflusst, auf einfache, kostengünstige Weise eine freie Lenkmomentbeeinflussung zusätzlich ermöglicht, ist vorgesehen, dass ein Druckmittelstrom eines Verdrängeraggregates (8) über eine selbstätig wirkende Entkoppelungseinrichtung (9) von/zu den Arbeitsräumen (7,7') des hydraulischen Stellmotors (6) geführt ist und/oder dass ein Druckmittelstrom eines mit einem sperrbaren Antrieb versehenen Verdrängeraggregates (8) von/zu den Arbeitsräumen (7,7') des hydraulischen Stellmotors (6) geführt ist.

## Beschreibung

Die Erfindung betrifft eine hydraulische Servolenkung für ein Fahrzeug mit einem Servoventil zur Steuerung eines Druckmittels in Arbeitsräume eines hydraulischen Servomotors nach dem Oberbegriff des Anspruchs 1 und ein Verfahren zum Betrieb einer hydraulischen Servolenkung nach Anspruch 17.

Hydraulische Servolenkungen deren Charakteristik oder Verhalten gezielt einstellbar sind, sind bekannt. Bei einer derartigen Parameterlenkung kann über eine in einem elektronischen Steuergerät abgelegte elektronische Kennlinie die hydraulische Kennlinie in einem Lenkgetriebe oder Lenkaktuator, d.h. in der Hilfskraftunterstützung oder der Bereitstellung einer Lenk-Fremdkraft in Abhängigkeit von der Fahrgeschwindigkeit des Fahrzeugs verändert werden. Dazu dient beispielsweise ein Servotronicwandler und eine entsprechende Regeleinheit.

Es ist eine hydraulische Servolenkung für ein Fahrzeug mit einem Servoventil zur direkten, druckabhängigen Steuerung eines Druckmittels in Arbeitsräume eines hydraulischen Servomotors, ohne dynamische, elektrische Eingriffsmöglichkeit, mit einem ersten Steuerteil und mit einem zweiten Steuerteil, das relativ zu dem ersten Steuerteil bewegbar ist, bekannt. Ein hydraulischer Stellmotor in dem Servoventil ist mit einem Steuerteil des Servoventils zur Verstellung der relativen Lage der Steuerteile wirkverbunden, wobei Arbeitsräume des hydraulischen Stellmotors des Servoventils Rückwirkräume des Servoventils darstellen.
Mit Hilfe einer elektrisch verstellbaren Blende wird der Anteil des Systemdrucks eingestellt mit dem das Lenkmoment vergrößert wird. Mit solch einer hydraulischen Servolenkung, die auch beispielsweise als "Servotronic 1" bekannt ist, lässt sich zwar ein für einen Fahrer eines Fahrzeugs gutes Lenkgefühl und ein guter Eindruck des Fahrbahnkontaktes des Fahrzeugs vermitteln, eine freie Lenkmomentbeeinflussung, beispielsweise im Sinne eines Parkmanöverassistenten, ist jedoch nicht möglich.

Die DE 195 41 749 C1 beschreibt eine hydraulische Servolenkung für Kraftfahrzeuge, mit einem als Drehschieberanordnung ausgebildeten Servoventil, dessen zueinander drehbewegliche Steuerteile miteinander durch eine vorzugsweise als Drehstab ausgebildete Federung, die die Steuerteile in eine Normallage relativ zueinander zu stellen sucht, antriebsgekoppelt sind. Eine Lenkhandhabe des Kraftfahrzeugs wirkt über eine Regelstrecke mit einem Stellmotor zusammen, welcher mit einem Steuerteil des Servoventils antriebsverbunden und/oder zwischen den Steuerteilen zu deren Verstellung relativ zueinander angeordnet ist.
In der DE 203 04 336 U1 wird eine Servolenkung für ein Fahrzeug beschrieben, mit einem Lenkgestänge, einem Lenkgetriebe, einem Lenkrad, das mit einem Steuer-Hydraulikmotor verbunden ist, einem von einem Elektromotor angetriebenen hydraulischen Stellmotor, der mit dem Steuer-Hydraulikmotor parallel geschaltet ist und einen Hydraulikstrom bereitstellen kann, der demjenigen überlagert wird, der von dem Steuer-Hydraulikmotor bereitgestellt wird.
Weiterhin wird in der DE 198 20 381 A1 ein Verfahren offenbart, welches zur Beeinflussung der Ventilkennlinie einer mittels eines Elektromotors und Hydraulikpumpe angetriebenen Servolenkung, in Abhängigkeit von der Stromaufnahme des Elektromotors dient, wobei, dass die aktuelle Stromaufnahme und Ist-Drehzahl des Elektromotors ständig bis zu einer Maximaldrehzahl erfasst und mit in einem Speicher abgelegten Werten für die Soll-Drehzahl beim jeweiligen Wert der Stromaufnahme verglichen werden und bei Abweichung eine Einstellung der Solldrehzahl erfolgt.
Der Erfindung liegt die Aufgabe zugrunde, eine hydraulische Servolenkung und ein Verfahren zum Betrieb der hydraulischen Servolenkung zu schaffen, wobei neben einem Betrieb der direkt druckabhängig das Lenkmoment beeinflusst, auf einfache, kostengünstige Weise eine freie Lenkmomentbeeinflussung zusätzlich ermöglicht ist. Die Aufgabe wird mit einer hydraulischen Servolenkung mit den Merkmalen des Anspruchs 1 und mit einem Verfahren zum Betrieb der hydraulischen Servolenkung nach Anspruch 17 gelöst.
Dadurch dass in die Arbeitsräume des hydraulischen Stellmotors des Servoventils, die fluidisch mit Rückwirkräumen des Servoventils verbunden sind, durch ein vorzugsweise zweites Verdrängeraggregat ein Druckmittelstrom über eine selbsttätig wirkende Entkoppelungseinrichtung geführt werden kann, ist beim Betrieb des Verdrängeraggregates auf einfache Weise eine Überlagerung eines Druckmittelstromes zur freien Lenkmomentbeeinflussung mit dem Rückwirk-Druckmittelstrom gegeben. Anstelle der Entkoppelungseinrichtung oder zusätzlich zu der Entkoppelungseinrichtung kann das Verdrängeraggregat oder dessen Antrieb sperrbar sein, um Leckagen bei einem stillgesetzten Verdrängeraggregat zu verhindern. Beim Betrieb des Verdrängeraggregats kann somit ohne Zwischenschaltung von Wegeventilen oder dergleichen ein Druckmittelstrom auf den hydraulischen Servomotor zur Lenkwinkelverstellung lenkbarer Räder des Fahrzeugs und zur Erzeugung eines weiteren Zusatzlenkmoments gelenkt werden, wobei die Steuerteile des Servoventils in ihrer relativen Lage verändert werden.
Bevorzugte Ausführungen der Erfindung ergeben sich aus den Unteransprüchen.
Eine weitere selbsttätig wirkende Entkoppelungseinrichtung zwischen dem Verdrängeraggregat und den Rückwirkäumen des Servoventils kann durch Blenden zwischen dem hydraulischen Stellmotor des Servoventils und dem Verdrängeraggregat dargestellt werden. Die Blenden zwischen dem hydraulischen Stellmotor und dem Servoventil ermöglichen einen Druckaufbau in den Rückwirkräumen des Servoventils.

Das Servoventil ist bevorzugt zur direkten, druckabhängigen Steuerung des Druckmittels in Arbeitsräume des hydraulischen Stellmotors des Servoventils ausgebildet.

Das Verdrängeraggregat zur Darstellung eines Druckmittelstromes in die Arbeitsräume des hydraulischen Stellmotors wird in einer besonders bevorzugten Ausführungsform der hydraulischen Servolenkung von einem Elektromotor angetrieben, ohne dass eine hydraulische Regelstrecke für den Druckmittelstrom erforderlich ist. Das Verdrängeraggregat ist über Rückschlagventile, die die Entkoppelungseinrichtung zu den Arbeitsräumen des hydraulischen Stellmotors des Servoventils bilden, mit dem hydraulischen Stellmotor fluidisch verbunden und bei inaktivem Verdrängeraggregat fluidisch von dem hydraulischen Stellmotor getrennt. Die Rückschlagventile verhindern, dass bei inaktivem Verdrängeraggregat Druckmittel von dem Servoventil in das Verdrängeraggregat fließen kann. Anstelle der Rückschlagventile können als Entkoppelungseinrichtung auch Blenden vorgesehen sein oder das Verdrängeraggregat oder dessen Antrieb sperrbar oder selbsthemmend ausgebildet sein.

Es kann zweckmäßig sein, zur Druckmittelversorgung des hydraulischen Stellmotors, des Servoventils und des hydraulischen Servomotors ein einziges Verdrängeraggregat wie etwa eine Lenkhelfpumpe anzuwenden.

In einer besonders bevorzugten Ausführungsform ist das Servoventil als Drehschieberanordnung gebildet, dessen zueinander drehbewegliche Steuerteile, ein Drehschieber und eine Steuerbuchse, über ein Federelement, wie einen Drehstab in Normallage gestellt sind und gekoppelt sind. Zwischen den Steuerteilen der Drehschieberanordnung ist der hydraulische Stellmotor als Ringkolben mit einem axialen Fortsatz mit Schrägverzahnung, die sich über eine Geradverzahnung abstützt, zur Verdrehung der Steuerteile des Servoventils bei einem Hub des Ringkolbens ausgebildet. Anstelle der Schräg- und Geradverzahnung kann eine Kugellängsführung und ein Kugelgewinde vorgesehen sein.

Die Arbeitsräume des hydraulischen Stellmotors sind fluidisch mit Arbeitsräumen des hydraulischen Servomotors zur Lenkwinkelverstellung gelenkter Räder eines Fahrzeugs verbunden, wodurch der hydraulische Stellmotor des Servoventils mit seinem Ringkolben zur Erzeugung eines Rückwirkmomentes auf das mit einer Lenkhandhabe verbundene Steuerteil (Drehschieber) wirkt. Das als Drehschieberanordnung ausgebildete Servoventil weist einen elektrohydraulischen Wandler auf, der den Druck des Druckmittelstromes in Abhängigkeit von Fahrtparametern, wie etwa der Fahrgeschwindigkeit steuert.

Der Druckmittelstrom des Verdrängeraggregates wird auf einfache Weise bevorzugt durch eine elektrische oder elektronische Steuerung/Regelung der Drehzahl und/oder des Stromes des Elektromotors und/oder durch eine Druckregelung gesteuert. Das Verdrängeraggregat kann von einer zweiseitig fördernden Druckmittelpumpe gebildet sein, die als Zahnradpumpe und bevorzugt als Innenzahnradpumpe ausgebildet sein kann. Ist der elektromotorische Antrieb und das Verdrängeraggregat reibungsarm ausgeführt, so ist der Druckmittel-Druck des Verdrängeraggregats proportional zu der Stromaufnahme des Elektromotors. Zur Glättung des Druckmittelstromes des Verdrängeraggregates können saugseitig zwischen dem Verdrängeraggregat und einem Druckmittelbehälter für das Verdrängeraggregat Blenden angeordnet sein.

Die Anordnung aus Verdrängeraggregat, Entkoppelungseinrichtung und Blenden zwischen dem hydraulischen Stellmotor des Servoventils und dem Servoventil kann bevorzugt zur Unterstützung von Lenkbewegungen mit rascher Lenkwinkeländerung und geringer Fahrgeschwindigkeit eingesetzt werden. Es kann zweckmäßig sein, bei hoher Fahrgeschwindigkeit und kleinen Lenkwinkeländerungen des Fahrzeugs (Autobahnfahrt) oder bei geringer Fahrgeschwindigkeit mit raschen Lenkwinkeländerungen (Parkieren) kein Zusatz-Lenkmoment durch das Verdrängeraggregat bereitzustellen, wobei lediglich die direkt druckabhängig wirkende hydraulische Lenkmomentbeeinflussung über das Servoventil wirksam ist. Zur Ausführung eines Parkmanöverassistenten und zur Lenkmomentunterstützung beim Kehren fahren kann es zweckmäßig sein, bis zu etwa 10 Nm Zusatz-Lenkmoment durch den Betrieb des Verdrängeraggregates bereitzustellen.

Mit der hydraulischen Servolenkung ist ein paralleler Betrieb eines relativ schnellen, ein druckabhängiges Zusatzmoment steuernden Servoventils und eines relativ dazu langsamen Zusatzmomentstellers, wie dem vorzugsweise elektrisch betriebenen Verdrängeraggregats möglich. Es kann auch ein alleiniger Betrieb des Servoventils ohne jeglichen Einfluß des Zusatzmomentstellers durchgeführt werden.

Die Erfindung wird nun näher anhand eines Ausführungsbeispiels und anhand der beiliegenden Zeichnung beschrieben.

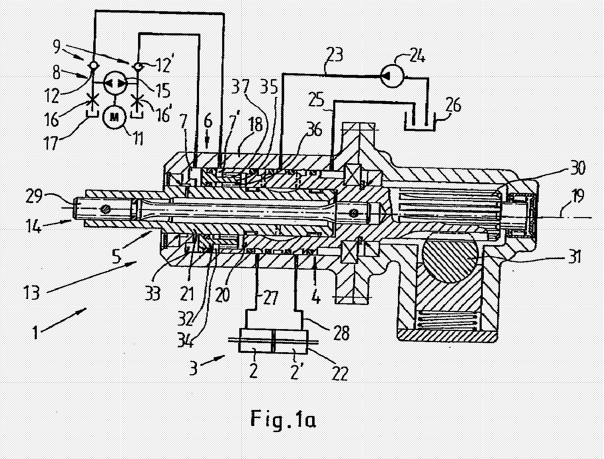

Fig. 1a zeigt einen Längsschnitt durch eine hydraulische Servolenkung,

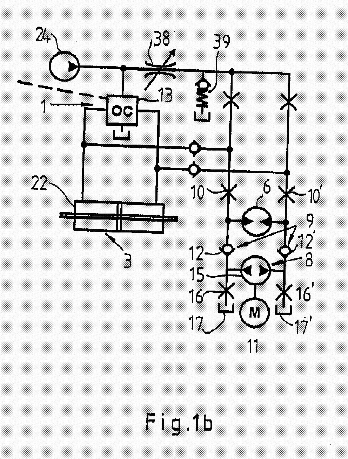

Fig. 1b zeigt ein Ersatzschaltbild der hydraulischen Servolenkung in Fig.1a.

In Fig. 1a ist in einem Längsschnitt und einer teilweisen schematischen Ansicht eine hydraulische Servolenkung gezeigt, die als Hilfskraftlenkung und Zahnstangen-Hydrolenkung ausgelegt ist. In einem Gehäuse 18 ist ein Servoventil 1 als Drehschieberandordnung 13 entlang einer Längsachse 19 des Gehäuses 18 angeordnet. Das Servoventil 1 ist aus einer Steuerbuchse 20, die ein erstes Steuerteil 4 bildet, und aus einem Drehschieber 21, der ein zweites Steuerteil 5 bildet und in der Steuerbuchse 20 relativ zu dieser in begrenztem Umfang drehbar gelagert ist, gebildet. Das Servoventil 1 versorgt Arbeitsräume 2,2' eines hydraulischen Servomotors 3, der hier als doppelt wirkender Hydraulikzylinder 22 dargestellt ist, über einen Zulauf 23 mit Druckmittel einer Druckmittelpumpe 24. Ein Niederdruckanschluß 25 an dem Servoventil 1 ist fluidisch mit einem Druckmittelbehälter 26 für die Druckmittelpumpe 24 verbunden. Je ein Arbeitsraum 2,2' des hydraulischen Servomotors 3 wird über jeweils eine Druckmittelleitung 27,28 mit Druckmittel versorgt. Das Servoventil 1 weist eine offene Mitte auf, wobei bei einer Neutralstellung der Steuerbuchse 20 zu dem Drehschieber 21, in dem Niederdruckanschluß 25, in dem Zulauf 23, sowie in den Druckmittelleitungen 27 und 28 für den hydraulischen Servomotor 3 Systemdruck herrscht. Die genannten Druckmittelleitungen kommunizieren dabei in dem Servoventil 1 in an sich bekannter Weise über Steuernuten auf der Mantelfläche des Drehschiebers 21 und Axialnuten in einer Ventilbohrung der Steuerbuchse 20 und über deren Steuernuten. Eine nicht gezeigte Lenkhandhabe ist drehfest mit dem Drehschieber 21 verbunden. Eine Drehbewegung an der Lenkhandhabe wird über den Drehschieber 21 und ein Federelement 14, das als Drehstab 29 den Drehschieber 21 und die Steuerbuchse 20 verbindet, auf ein drehfest mit der Steuerbuchse 20 verbundenes Ritzel 30 übertragen. Das Ritzel 30 kämmt mit einer Zahnstange 31, die quer zu der Längsachse 19 des Servoventils 1 und axialverschieblich in dem Gehäuse 18 gelagert ist. Die Zahnstange 31 wirkt gemeinsam über den doppelt wirkenden Hydraulikzylinder 22 auf ein oder mehrere lenkbare Räder eines Fahrzeugs zur Lenkwinkelverstellung der Räder. Bei Verdrehung des Drehschiebers 21 relativ zu der Steuerbuchse 20 in die eine oder andere Richtung wird die Zahnstange 31 von dem Ritzel 30 in die eine oder andere Richtung verschoben. Gleichzeitig gelangt Druckmittel über weiter geöffnete Zulauf-Steuernuten in dem Servoventil 1 in die zugeordneten Axialbohrungen und über eine Radialnut und die jeweilige Druckmittelleitung 27, 28 in den einen oder anderen Arbeitsraum des doppelt wirkenden Hydraulikzylinders 22, wodurch die Zahnstangenbewegung hydraulisch unterstützt wird.

Mit dem in den Figuren 1a und 1b gezeigten Servoventil 1 kann die Sollwerteingabe eines Fahrers an der Lenkhandhabe durch eine automatisch von einer Steuer- und/oder Regelungseinrichtung der Servolenkung oder des Fahrzeugs vorgebbaren Sollwert-Korrektur frei überstimmt werden. Damit lässt sich ein Parkmanöverassistent und/oder eine heading-control-Funktion und/oder die Kompensation von Fahrbahnneigungen erreichen. Es ist gleichzeitig ein paralleler Betrieb der direkt druckabhängigen, hydraulischen Lenkmomentbeeinflussung wie oben beschrieben mit einer, durch ein vorzugsweise elektrisch betätigtes Verdrängeraggregat 8 dargestellten Lenkmomentbeeinflussung über einen Druckmittelstrom des Verdrängeraggregates 8 auf Rückwirkräume und einen hydraulischen Stellmotor 6 des Servoventils 1 möglich.

Wie Fig. 1a zeigt, ist in dem Gehäuse 18 ein Ringkolben 32 koaxial zu der Längsachse 19 des Servoventils 1 und axial verschiebbar zwischen zwei Ringkammern 33, 34 zu beiden Seiten des Ringkolbens 32 angeordnet. Die Ringkammern 33, 34 lassen sich mit den Druckmittelleitungen 27,28 des doppelt wirkenden Hydraulikzylinders 22, also des hydraulischen Servomotors 3 durch die Steuerteile 4, 5 des Servoventils 1 fluidisch verbinden. Der Ringkolben 32 weist einen axialen Ringfortsatz 35 mit einer radial zu dem Drehschieber 21 gerichteten Schrägverzahnung 36 auf, die in eine Schrägverzahnung des Drehschiebers 21 eingreift. Zudem ist an dem Ringfortsatz 35 eine radial zu der Steuerbuchse 20 gerichtete Geradverzahnung 37 angeordnet, die in eine entsprechende Geradverzahnung an der Steuerbuchse 20 eingreift. Zur Verringerung der Reibung kann diese auch als Kugellängsführung ausgebildet sein.

Relativdrehungen von Steuerbuchse 20 und Drehschieber 21 bewirken, dass der Ringkolben 32 axial verschoben wird. Die Ringkammern 33 und 34 an dem Ringkolben 32 wirken als Rückwirkräume des Servoventils 1 und sind Arbeitsräume 7, 7' des durch den Ringkolben 32 und einen Gehäuseabschnitt des Gehäuses 18 gebildeten hydraulischen Stellmotors 6 für das Servoventil 1. Die Ringkammern 33, 34 oder Arbeitsräume 7, 7' kommunizieren zwangsläufig mit den Arbeitsräumen 2, 2' des hydraulischen Servomotors 3 in dem Sinne, dass der Ringkolben 32 des hydraulischen Stellmotors 6 eine zur Stellkraft des hydraulischen Servomotors 3 oder des doppelt wirkenden Hydraulikzylinders 22 analoge Axialkraft erzeugt und den Drehschieber 21 und die Steuerbuchse 20 in ihre Mittellage relativ zueinander zurückzudrehen sucht und dadurch an dem Drehschieber 21 und an der mit diesem verbundenen Lenkhandhabe eine als Betätigungswiderstand fühlbare Rückwirkkraft erzeugt. Wird der hydraulische Stellmotor 6, bzw. die Ringkammern 33, 34 mit Druckmittel des Verdrängeraggregates 8 beaufschlagt, so wird ein Zusatzlenkmoment dem Lenkmoment des Hydraulikzylinders 22 überlagert.

Wie Fig. 1b in einem Ersatzschaltbild der hydraulischen Servolenkung in Fig. 1a zeigt, wird eine elektrisch verstellbare Blende 38 zur Steuerung des Anteils des Systemdruckes, der zur Rückwirkkraft beiträgt, eingesetzt. Ein Druckbegrenzungsventil 39 begrenzt den Duck in den Rückwirkräumen. Um das Lenkmoment frei beeinflussen zu können, wird das Verdrängeraggregat 8, das in Fig. 1a und Fig. 1b als zweiseitig wirkende Druckmittelpumpe 15 dargestellt ist, beispielsweise von einer Steuer- und/oder Regelungseinrichtung der hydraulischen Servolenkung angesteuert. Zu diesem Zweck ist das Verdrängeraggregat 8 von einem Elektromotor 11 angetrieben, wobei das Verdrängeraggregat 8 und der Elektromotor 11 reibungsarm ausgeführt sind, sodass direkt über die Stromaufnahme des Elektromotors 11 der Druck des von dem Verdrängeraggregat 8 erzeugten Druckmittelstromes geregelt werden kann. Der von dem Verdrängeraggregat 8 bereitgestellte Druckmittelstrom wird den Arbeitsräumen 7, 7' des hydraulischen Stellmotors 6 des Servoventils 1 zugeführt und der Ringkolben 32 in Abhängigkeit von der Drehrichtung des Elektromotors 11 in die eine oder andere axiale Richtung bewegt und die Steuerbuchse 20 relativ zu dem Drehschieber 21 verdreht. Das Druckmittel wird von dem Verdrängeraggregat 8 über eine Entkoppelungseinrichtung 9 zu den Arbeitsräumen 7, 7' oder Ringkammern 33, 34 des hydraulischen Stellmotors 6 geführt. Die Entkoppelungseinrichtung 9 arbeitet selbsttätig, d.h. es werden Rückschlagventile 12, 12' oder Blenden angewandt. Der hydraulische Stellmotor 6 ist fluidisch über Blenden 10, 10' mit dem Servoventil 1 verbunden, wodurch eine gewisse Entkoppelung der Rückwirkräume des Servoventils 1 ermöglicht ist und ein weitgehend unabhängiger Betrieb der elektrisch betätigten, hydraulischen Lenkmomentbeeinflussung durch das Verdrängeraggregat 8 und dem hydraulischen Stellmotor 6 von der direkt druckabhängig wirkenden Lenkmomentbeeinflussung des Servoventils 1 ermöglicht ist.

Zur Glättung des Druckmittelstromes des Verdrängeraggregats 8 sind zwischen einem Druckmittel-Behälter 17 für das Verdrängeraggregat 8 und dem Verdrängeraggregat 8 Blenden 16, 16' vorgesehen.

## Patentansprüche

1. Hydraulische Servolenkung für ein Fahrzeug, mit einem Servoventil (1) zur Steuerung eines Druckmittels in Arbeitsräume (2,2') eines hydraulischen Servomotors (3) mit einem ersten Steuerteil (4) und mit einem zweiten Steuerteil (5), das relativ zu dem ersten Steuerteil (4) bewegbar ist und mit einem hydraulischen Stellmotor (6) dessen Arbeitsräume (7,7') Rückwirkräume des Servoventils (1) sind, wobei der hydraulische Stellmotor (6) mit einem Steuerteil (4,5) des Servoventils (1) zur Beeinflussung der relativen Lage der Steuerteile (4,5) wirkverbunden ist, **dadurch geken nzeichnet**, dass ein Druckmittelstrom eines Verdrängeraggregates (8) über eine selbsttätig wirkende Entkoppelungseinrichtung (9) und/oder der/ein Druckmittelstrom des/eines von einem sperrbaren Antrieb angetriebenen Verdrängeraggregates (8) von/zu den Arbeitsräumen (7,7') des hydraulischen Stellmotors (6) geführt ist.

2. Hydraulische Servolenkung nach Anspruch 1, **dadurch gekennzeichnet, dass** die Arbeitsräume (7,7') des hydraulischen Stellmotors (6) fluidisch über Blenden (10,10') mit dem Servoventil (1) verbunden sind.

3. Hydraulische Servolenkung nach einem der Ansprüche 1 oder 2, **dadurch gekennzeichnet, dass** das Servoventil (1) zur direkten druckabhängigen Steuerung eines Druckmittels in Arbeitsräume (2,2') des hydraulischen Servomotors (3) ausgebildet ist.

4. Hydraulische Servolenkung nach einem der Ansprüche 1 bis 3, **dadurch gekennzeichnet, dass** das Verdrängeraggregat (8) zur Darstellung des Druckmittelstromes in die Arbeitsräume (7,7') des hydraulischen Stellmotors (6) von einem Elektromotor (11) angetrieben ist.

5. Hydraulische Servolenkung nach einem der Ansprüche 1 bis 4, **dadurch gekennzeichnet dass** die Entkoppelungseinrichtung (9) durch Rückschlagventile (12,12') gebildet ist, die den Druckmittelstrom zu den Arbeitsräumen (7,7') des hydraulischen Stellmotors (6) des Servoventils (1) ermöglichen.

6. Hydraulische Servolenkung nach einem der Ansprüche 1 bis 3, **dadurch gekennzeichnet, dass** die Entkoppelungseinrichtung (9) durch Blenden zwischen dem Verdrängeraggregat (8) und dem hydraulischen Stellmotor (6) des Servoventils (1) gebildet ist.

7. Hydraulische Servolenkung nach einem der Ansprüche 1 bis 6, **dadurch gekennzeichnet, dass** zur Druckmittelzufuhr zu dem Servoventil (1), dem hydraulischen Servomotor (3) und zu den Arbeitsräumen (7,7') des hydraulischen Stellmotors (6) des Servoventils (1) ein einziges Verdrängeraggregat angewandt ist.

8. Hydraulische Servolenkung nach einem der Ansprüche 1 bis 7, **dadurch gekennzeichnet, dass** das Servoventil (1) als Drehschieberanordnung (13) ausgebildet ist, dessen zueinander drehbewegliche Steuerteile (4,5) über ein Federelement (14), das die Steuerteile (4,5) in eine Normallage relativ zueinander zu stellen sucht, gekoppelt sind und die Steuerteile (4,5) bei Verdrängerhüben des hydraulischen Stellmotors (6) des Servoventils (1) relativ zueinander verdreht werden.

9. Hydraulische Servolenkung nach einem der Ansprüche 1 bis 8, **dadurch gekennzeichnet, dass** der Druckmittelstrom des Verdrängeraggregates (8) durch eine direkte elektrische oder elektronische Steuerung/Regelung der Drehzahl und/oder des Stromes des Elektromotors (11) und/oder durch eine Druckregelung gesteuert ist.

10. Hydraulische Servolenkung nach einem der Ansprüche 1 bis 9, **dadurch gekennzeichnet, dass** das Verdrängeraggregat (8) zur Darstellung des Druckmittelstromes in die Arbeitsräume (7,7') des hydraulischen Stellmotors (6) des Servoventils (1) als zweiseitig fördernde Druckmittelpumpe (15) ausgebildet ist.

11. Hydraulische Servolenkung nach Anspruch 10, **dadurch gekennzeichnet, dass** die zweiseitig fördernde Druckmittelpumpe (15) eine Zahnradpumpe ist.

12. Hydraulische Servolenkung nach einem der Ansprüche 1 bis 11, **dadurch gekennzeichnet, dass** das Verdrängeraggregat (8) über Blenden (16,16') mit einem Druckmittel-Behälter (17) fluidisch in Verbindung steht.

13. Hydraulische Servolenkung nach einem der Ansprüche 1 bis 12, **dadurch gekennzeichnet, dass** durch das Verdrängeraggregat (8) bei hohen Fahrgeschwindigkeiten des Fahrzeugs und kleinen Lenkgeschwindigkeiten und/oder bei kleiner Fahrgeschwindigkeit des Fahrzeugs und hohen Lenkgeschwindigkeiten kein Zusatz-Lenkmoment des hydraulischen Stellmotors (6) des Servoventils (1) erzeugt wird.

14. Hydraulische Servolenkung nach einem der Ansprüche 1 bis 13, **dadurch gekennzeichnet, dass** bei einem Lenkmanöver, wie dem Fahren von Kehren, durch das Verdrängeraggregat (8) ein Zusatz-Lenkmoment des hydraulischen Stellmotors (6) von bis zu etwa 5 Nm erzeugt wird.

15. Hydraulische Servolenkung nach einem der Ansprüche 1 bis 14, **dadurch gekennzeichnet, dass** durch das Verdrängeraggregat (8), durch die selbsttätig wirkende Entkoppelungseinrichtung (9) und durch den hydraulischen Stellmotor (6) des Servoventils (1) ein Parkmanöverassistent oder eine Einrichtung zur Unterstützung eines automatischen Stau-Folge-Wahrens oder eine Einrichtung zur Kompensation von Fahrbahnneigungen dargestellt ist.

16. Hydraulische Servolenkung nach Anspruch 15, **dadurch gekennzeichnet, dass** durch den Parkmanöverassistent ein Zusatz-Lenkmoment von bis zu etwa 10 Nm bereitgestellt ist.

17. Verfahren zum Betrieb einer Servolenkung nach einem der Ansprüche 1 bis 16, **dadurch gekennzeichnet, dass** ein paralleler Betrieb des Servoventils (1) und des Verdrängeraggregates (8) oder ein Betrieb des Servoventils (1) ohne einen Betrieb des Verdrängeraggregates (8) durchführbar ist.

18. Verfahren nach Anspruch 17, **dadurch gekennzeichnet, dass** durch das Verdrängeraggregat (8) eine geringere Rate des Druckanstiegs des Druckmittels für den hydraulischen Stellmotor (6) als durch das Servoventil (1) ermöglicht ist.
